# EUROPEAN PATENT APPLICATION

(11) **EP 3 633 213 A1**
(43) Date of publication of application: **08.04.2020**
(21) Application number: 19793200.7
(22) Date of filing: 31.01.2019
(51) Int. Cl.: F16B 2/22, B65D 59/00

(54) **CONNECTING PIPE FITTING, PIPE ASSEMBLY AND PIPE CONNECTING METHOD**

(30) Priority: 23.04.2018 CN 201810367318
(71) Applicant: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528000 (CN)
(72) Inventor: LI, Ximin, Foshan Guangdong 528100 (CN); LIN, Xiyong, Foshan Guangdong 528100 (CN); DIAO, Zhenbin, Foshan Guangdong 528100 (CN); CAO, Huijian, Foshan Guangdong 528100 (CN); CHENG, Jiajia, Foshan Guangdong 528100 (CN); LIAO, Jianbo, Foshan Guangdong 528100 (CN)
(74) Representative: Petraz, Gilberto Luigi
(86) International application number: PCT/CN2019/074286
(87) International publication number: WO 2019/205770

(57) **Abstract**

A connecting pipe fitting, comprising a pipe fitting joint (11) and an elastic clamping sleeve (12). The pipe fitting joint (11) comprises a core (111) located at an end portion, and an abutment block (112) being provided on an outer wall of a middle portion of the pipe fitting joint (11), the elastic clamping sleeve (12) is sleeved on the core (111), a limit stop (121) being provided on an end face of the elastic clamping sleeve (12), and one end of the limit stop (121) being connected to the elastic clamping sleeve (12), the other end of the limit stop (121) extending in a direction close to the core (111), a limit protrusion (1111) being provided on the outer wall of the core (111), the limit stop (121) being limited between the abutment block (112) and the limit protrusion (1111), and the distance between the limit stop (121) and the central axis of the elastic clamping sleeve (12) being a first distance, the distance between the limit protrusion (1111) and the central axis of the core (111) being a second distance, and the difference between the second distance and the first distance being smaller than the deformable amount of the elastic clamping sleeve (12) in the radial direction. Protection of the pipe fitting joint during transportation or storage is achieved by means of an elastic clamping sleeve, preventing the occurrence of damage. A pipe assembly and a pipe connecting method are also included.

## Description

### TECHNICAL FIELD

The present disclosure relates to the technical field of pipe fitting connection, and more particularly, to a connecting pipe fitting, a pipe assembly and a pipe connecting method.

### BACKGROUND

In conventional pipe fitting connecting technologies, the connection between pipes is generally achieved by pipe fitting joints. When the pipe fitting joint is used to achieve the connection between pipes, the pipe is generally pressed against a core of the pipe fitting joint by an elastic clamping sleeve to achieve the connection between pipes. Both the elastic clamping sleeve and the pipe fitting joint are required in the process of use, so in the process of transportation, the elastic clamping sleeve is generally placed on the pipe fitting joint for transportation in an assembled state. However, the general elastic clamping sleeve is easily to be detached from the pipe fitting joint, or the elastic clamping sleeve sleeved on the pipe fitting joint during the process of transportation cannot be conveniently and quickly applied to the pipe connection.

### SUMMARY

Based on the above, it is necessary to provide a connecting pipe fitting, a pipe assembly and a pipe connecting method, which can protect the pipe fitting joint and can be conveniently and quickly applied to the connection of pipes.

The technical solutions according to the present disclosure are described as follows.

A connecting pipe fitting is provided, including a pipe fitting joint and an elastic clamping sleeve. The pipe fitting joint includes a core at an end thereof, an outer wall of a middle portion of the pipe fitting joint is provided with an abutting block, and the elastic clamping sleeve is sleeved on the core. An end face of the elastic clamping sleeve is provided with a limit stop, an end of the limit stop is connected to the elastic clamping sleeve, and another end of the limit stop extends in a direction close to a central axis of the elastic clamping sleeve. An outer wall of the core is provided with a limit protrusion, and the limit stop is limited between the abutting block and the limit protrusion. A distance between the limit stop and the central axis of the elastic clamping sleeve is a first distance, a distance between the limit protrusion and the central axis of the core is a second distance, and a difference between the second distance and the first distance is less than a deformable amount of the elastic clamping sleeve in the radial direction.

The above solution provides a connecting pipe fitting. The elastic clamping sleeve is sleeved on the core during the process of transportation and storage of the connecting pipe fitting by providing the elastic clamping sleeve. The limit stop connected to the elastic clamping sleeve is limited between the abutting block and the limit protrusion by the limit protrusion, thereby proving a fixation effect, so that the elastic clamping sleeve is kept sleeved on the core to protect the core and prevent the connecting pipe fitting from damage during the process of transportation and storage. Moreover, the distance between the limit stop and the central axis of the elastic clamping sleeve is the first distance, and the distance between the limit protrusion and the central axis of the core is the second distance. The difference between the second distance and the first distance is less than the deformable amount of the elastic clamping sleeve in the radial direction. Therefore, during the process of installation and use, the elastic clamping sleeve can be deformed radially by an external force, and the limit stop moves in a direction away from the limit protrusion to escape the restriction of the limit protrusion, thereby the elastic clamping sleeve is removed from the core and applied to the pipe connection. Specifically, the removed elastic clamping sleeve is used to sleeve the pipe on the core tightly to achieve the connection of pipes. In turn, the protection of the pipe fitting joints during the process of transportation and storage is achieved, and the connection of pipes can be achieved conveniently and quickly during the process of installation and use.

Further, the limit protrusion is an annular protrusion, and there are two limit stops arranged to be opposite to each other. The elastic clamping sleeve is able to be radially pressed and deformed, so that a distance between the two limit stops is larger than an outer diameter of the annular protrusion.

Further, a side wall of the annular protrusion is tapered such that an end of the annular protrusion close to the abutting block has a larger outer diameter. A side surface of the limit stop opposite to the core is an inclined surface. An end of the limit stop close to the abutting block forms a tine engageable with a side of the annular protrusion close to the abutting block.

Further, the end face of the elastic clamping sleeve provided with the limit stop is further provided with two anti-slide blocks arranged to be opposite to each other. An end of each anti-slide block is connected to the elastic clamping sleeve, and another end of each anti-slide block extends in a direction close to the central axis of the elastic clamping sleeve. A distance between the two anti-slide blocks is larger than an outer diameter of the annular protrusion.

Further, the anti-slide blocks are located between the two limit stops, and the anti-slide block and the limit stop are equidistantly distributed in the circumferential direction of the end face of the elastic clamping sleeve.

Further, the limit protrusion is located at an end of the core away from the abutting block, and an annular sealing tooth is disposed on an outer wall of the core. The sealing tooth is located between the limit protrusion and the abutting block, and a maximum outer diameter of the sealing tooth is smaller than an inner wall diameter of the elastic clamping sleeve.

Further, the outer wall of the core is further provided with two annular anti-off teeth, and a maximum outer diameter of each anti-off tooth is smaller than the maximum outer diameter of the sealing tooth. The two anti-off teeth are located on both sides of the sealing tooth respectively. A side wall of the sealing tooth and a side wall of the anti-off tooth are both tapered such that an end of the sealing tooth close to the abutting block has a larger outer diameter and an end of the anti-off tooth close to the abutting block of the anti-off tooth has a larger outer diameter.

A pipe assembly is also provided, including a pipe, a pipe fitting joint and an elastic clamping sleeve. An outer wall of a middle portion of the pipe fitting joint is provided with an abutting block. An end of the pipe fitting joint is a core, and an outer wall of the core is provided with a limit protrusion. An end face of the elastic clamping sleeve is provided with a limit stop, an end of the limit stop is connected to the elastic clamping sleeve, and another end of the limit stop extends in an direction close to a central axis of the elastic clamping sleeve. A distance between the limit stop and the central axis of the elastic clamping sleeve is a first distance, a distance between the limit protrusion and the central axis of the core is a second distance, and a difference between the second distance and the first distance is less than a deformable amount of the elastic clamping sleeve in a radial direction, so that the pipe assembly has a first state and a second state.

The first state is a state where the elastic clamping sleeve is sleeved on the core, and the limit stop is limited between the limit protrusion and the abutting block.

The second state is a state where the pipe is inserted into the elastic clamping sleeve, an end face of the pipe abuts against the limit stop, the pipe is sleeved on the core after being reamed, and the elastic clamping sleeve shrinks to press the pipe against the core.

The above solution provides a pipe assembly including a pipe, a pipe fitting joint and an elastic clamping sleeve. The distance between the limit stop and the central axis of the elastic clamping sleeve is the first distance, the distance between the limit protrusion and the central axis of the core is the second distance, and the difference between the second distance and the first distance is smaller than the deformable amount of the elastic clamping sleeve in a radial direction , so that the pipe assembly has the first state and the second state. The first state is mainly embodied in a process of transportation and storage where the elastic clamping sleeve is sleeved on the core, and the elastic clamping sleeve is always on the core under the restriction of the limit protrusion and the abutting block. The second state is mainly embodied in the process of installation and use where the elastic clamping sleeve is removed from the core by an external force, and then the pipe is inserted into the elastic clamping sleeve until the end face of the pipe abuts against the limiting stop, so that the elastic clamping sleeve cannot slide toward the middle portion of the pipe during the process of reaming. The reamed pipe is sleeved on the core, and the elastic clamping sleeve shrinks after standing for a period of time such that the pipe is pressed against the core, thereby achieving the connection of pipes. Therefore, the pipe assembly mentioned above can achieve the protection of the pipe fitting joint during the process of transportation and storage, and can remove the elastic clamping sleeve from the core easily and quickly for the connection of pipes when installation and use is required.

Further, an inner wall of the elastic clamping sleeve is provided with a rib arranged along an axial direction of the elastic clamping sleeve, and the rib is able to be in an interference fit with the pipe.

A pipe connecting method adopting the connecting pipe fitting described above is further provided, including the following steps:
pressing the elastic clamping sleeve along a radial direction of the elastic clamping sleeve to cause deformation of the elastic clamping sleeve so that the first distance is larger than the second distance, and removing the elastic clamping sleeve from the core;
inserting the pipe to be connected into the elastic clamping sleeve until the end face of the pipe abuts against the limit stop;
reaming the pipe sleeved with the elastic clamping sleeve by using a reamer; and
inserting the core into the reamed pipe, the elastic clamping sleeve shrinking after standing for a period of time such that the pipe is sleeved on the core tightly.

By adopting the above pipe connecting method, the protection of the pipe fitting joint in the process of storage can be satisfied, and the elastic clamping sleeve sleeved on the core can be directly used in the process of the pipe connection to achieve the connection of pipes, thereby the whole process is more simple. Specifically, during the process of transportation, the elastic clamping sleeve is sleeved on the core to protect the core. During the process of installation and use, the elastic clamping sleeve is removed from the pipe, the pipe to be connected is inserted into the elastic clamping sleeve, and then the pipe is reamed. The core is then inserted into the reamed pipe, and the elastic clamping sleeve shrinks after standing for a period of time such that, so as to sleeve the pipe on the core tightly to achieve the connection of pipes. The whole process does not need to design the fastening connecting parts to achieve the connection between the pipe and the pipe fitting joint, but directly remove the elastic clamping sleeve for protecting the core from the core in order to the connection of pipes, so that the whole process is convenient and quick.

### BRIEF DESCRIPTION OF THE DRAWINGS

FIG. 1 is a cross-sectional view of a connecting pipe fitting according to an embodiment.
FIG. 2 is a top view of the elastic clamping sleeve according to the embodiment.
FIG. 3 is a cross-sectional view of the elastic clamping sleeve according to the embodiment.
FIG. 4 is a structural schematic diagram illustrating the elastic clamping sleeve according to the embodiment.
FIG. 5 is a cross-sectional view taken along line A-A of FIG. 2.
FIG. 6 is a structural schematic diagram illustrating a core and a pipe to be connected according to the embodiment.
FIG. 7 is a schematic diagram illustrating an assembly of the pipe on the pipe fitting joint according to the embodiment.

### Description of the Reference Numerals:

10 connecting pipe fitting, 11 pipe fitting joint, 111 core, 1111 limit protrusion, 1112 sealing tooth, 1113 anti-off tooth, 112 abutting block, 12 elastic clamping sleeve, 121 limit stop, 122 anti-slide block, 123 rib, and 20 pipe.

### DETAILED DESCRIPTION

In order to facilitate the understanding of the present invention, the present invention will be described more fully hereinafter with reference to the related accompanying drawings. Preferable examples of the present invention are presented in the drawings. However, the present invention may be embodied in many different forms and is not limited to the examples described herein. Rather, these examples are provided so that the understanding of the disclosure of the present invention will be more thorough.

It should be understood that when an element is defined as "fixed to" another element, it is either directly on an element or indirectly on an element with a mediating element. When an element is considered to be "connected" to another element, it can be directly connected to another element or indirectly connected to another element with a mediating element. Instead, when an element is referred to as being "directly on" another element, there is no intermediate element. The terms "vertical", "horizontal", "left", "right", and the like used herein are for illustrative purposes only and are not intended to be the only embodiment.

All technical and scientific terms used herein have the same meaning as commonly understood by skilled person in the art to which the present invention belongs, unless otherwise defined. The terms used in the specification of the present invention herein are for the purpose of describing specific examples only and are not intended to restrict the present invention. The term "and/or" used herein includes any and all combinations of one or more of the associated listed items.

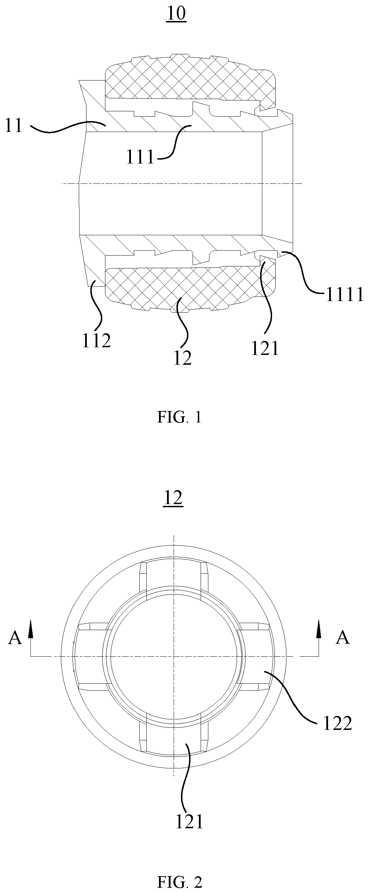

As shown in FIG. 1, a connecting pipe fitting 10 is provided in an embodiment, including a pipe fitting joint 11 and an elastic clamping sleeve 12. The pipe fitting joint 11 includes a core at an end thereof. An outer wall of a middle portion of the pipe fitting joint 11 is provided with an abutting block 112. The elastic clamping sleeve 12 is sleeved on the core 111. An end face of the elastic clamping sleeve 12 is provided with a limit stop 121. An end of the limit stop 121 is connected to the elastic clamping sleeve 12, and another end of the limit stop 121 extends in a direction close to core 111. An outer wall of the core 111 is provided with a limit protrusion 1111. The limit stop 121 is limited between the abutting block 112 and the limit protrusion 1111. A distance between the limit stop 121 and the central axis of the elastic clamping sleeve 12 is a first distance, and a distance between the limit protrusion 1111 and the central axis of the core 111 is a second distance. A difference between the second distance and the first distance is less than a deformable amount of the elastic clamping sleeve 12 in a radial direction.

The above solution mainly provides a connecting pipe fitting 10, which protects the core 111 from damage by sleeving the elastic clamping sleeve 12 on the core 111 of the pipe fitting joint 11 during the process of storage and transportation. Specifically, the middle portion of the pipe fitting joint 11 is provided with the abutting block 112 at the outer wall thereof, and the elastic clamping sleeve 12 is sleeved on the core 111 from the end of the pipe fitting joint 11 during the process of use. During the sleeving process of the elastic clamping sleeve 12, as the core 111 is gradually inserted into the elastic clamping sleeve 12, the limit stop 121 is elastically deformed and then stuck to the side of limit protrusion 1111 close to the abutting block 112. Even further, the elastic clamping sleeve 12 is limited on the core 111 by abutting the end face of the elastic clamping sleeve 12 against the abutting block 112 to prevent damage to the core 111.

During the process of installation and use, the limit stop 121 is moved away from the limit protrusion 1111 by an external force, and then the elastic clamping sleeve 12 is removed from the core 111, and the pipe 20 is sleeved on the core 111 tightly by using the elastic clamping sleeve 12 to achieve the connection of pipes 20. Thereby, the protection of the core 111 during the process of transportation is ensured, and the connection process of the pipes 20 is conveniently and quickly achieved during the process of installation and use.

Specifically, the limit protrusion 1111 may be disposed at an end of the core 111 away from the abutting block 112 or at an end of the core 111 close to the abutting block 112. The limit protrusion 1111 may be disposed in such a way that the limit stop 121 on the elastic clamping sleeve 12 is limited at the side close to the abutting block 112 by the limit protrusion 1111, and the elastic clamping sleeve 12 is limited on the core 111 by the abutment between the abutting block 112 and the end face of the elastic clamping sleeve 12.

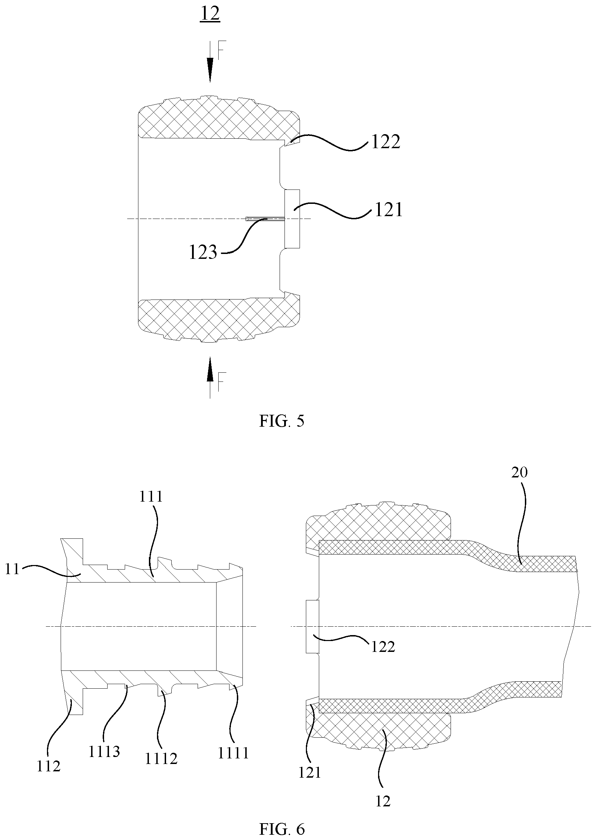

Further, the limit protrusion 1111 in the above solution may be formed by protrusions circumferentially spaced apart on the outer wall of the core 111, and there may be one or at least two limit stops 121, as long as the cooperation between the limit protrusion 1111 and the limit stop 121 can function as a limitation to position. Specifically, in an embodiment, as shown in FIG. 1, the limit protrusion 1111 is an annular protrusion. As shown in FIG. 2 to FIG. 4, there are two limit stops 121 which are oppositely disposed. Moreover, in order to further improve the convenience of the connecting pipe fitting 10 during the process of use, as shown in FIG. 5, elastic deformation of the elastic clamping sleeve 12 can be generated when a pressing force is applied in the radial direction of the elastic clamping sleeve 12, so that a distance between the two limit stops 121 is larger than an outer diameter of the annular protrusion, and the elastic clamping sleeve 12 can be removed from the pipe fitting joint 11. In this way, the quick removal of the elastic clamping sleeve 12 can be achieved, and the performance of use can be improved.

Moreover, when the elastic clamping sleeve 12 is pressed in the radial direction, it is preferably pressed in a direction perpendicular to a line connecting the two limit stops 121, so that the elastic clamping sleeve 12 changes from a circular shape in an initial natural state to an elliptical shape. In this way, the distance between the two limit stops 121 is increased, the distance between the two limit stops 121 is larger than the outer diameter of the annular protrusion, and the limit stop 121 is disengaged from the bound of the annular protrusion, so that the elastic clamping sleeve 12 can be taken out.

Specifically, the cross section of the annular protrusion in the above solution may be a rectangle, a trapezoid or the like as long as it can play a restricting role on the limit stop 121. Further, as shown in FIG. 1, a side wall of the annular protrusion is tapered, an outer diameter of an end of the annular protrusion 112 close to the abutting block 112 is larger, and a side surface opposite to the core 111 is an inclined surface. An end of the limit stop 121 close to the abutting block 112 forms a tine, and the tine is engageable with a side of the annular protrusion close to the abutting block 112. Through the shape of the limit protrusion 1111 and the limit stop 121, the elastic clamping sleeve 12 can be pushed more conveniently along the axial direction of the pipe fitting joint 11 during the process of installation, so that the tine of the limit stop 121 is engaged with the side of the annular protrusion close to the abutting block 112 with the annular protrusion.

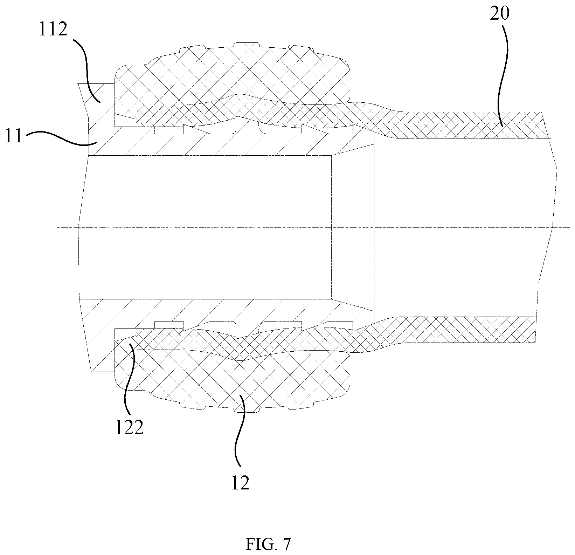

Further, in an embodiment, as shown in FIG. 2, the end face of the elastic clamping sleeve 12 provided with the limit stop 121 is further provided with two anti-slide blocks 122 which are oppositely disposed. An end of the anti-slide block 122 is connected to the elastic clamping sleeve 12, and another end of the anti-slide block 122 extends in a direction close to the central axis of the elastic clamping sleeve 12, as shown in FIG. 7. A distance between the two anti-slide blocks is larger than an outer diameter of the annular protrusion.

In order to further ensure that the elastic clamping sleeve 12 is able to be kept at the end of the pipe 20 during the process of reaming, the extent to which the elastic clamping sleeve 12 is limited at the end of the pipe 20 is improved by further disposing the anti-slide block 122. Moreover, basing on the fact that the elastic clamping sleeve 12 needs to be sleeved on the core 111 of the pipe fitting joint 11 during the transportation of the connecting pipe fitting 10 to protect the core 111 of the pipe fitting joint 11, the elastic clamping sleeve 12 needs to be further pressed afterwards to increase the distance between the two limit stops 121, so that the elastic clamping sleeve 12 can be removed. Therefore, the two anti-slide blocks 122 are arranged to have a distance larger than the outer diameter of the annular protrusion therebetween, so that during the process of pressing the elastic clamping sleeve 12 to cause deformation, although the two anti-slide blocks 122 are moved toward each other, they are not limited by the limit protrusion 1111, to avoid a case where the elastic clamping sleeve 12 cannot be removed.

More specifically, in an embodiment, as shown in fig. 2, the anti-slide blocks 122 are located between the two limit stops 121, and the anti-slide blocks 122 and the limit stops 121 are equidistantly distributed in the circumferential direction of the end face of the elastic clamping sleeve 12. The anti-slide block 122 and the limit stop 121 is equidistantly distributed in the circumferential direction, so that the anti-slide block 122 and the limit stop 121 can limit the elastic clamping sleeve 12 at the end face of the pipe 20 more securely during the process of reaming. Moreover, by the reasonable arrangement of the position of the anti-slide block 122 and the limit stop 121, when the elastic clamping sleeve 12 needs to be removed from the pipe fitting joint 11, it only needs to find an appropriate position according to the position of the anti-slide block 122 to press the elastic clamping sleeve 12, thereby improving the operation efficiency. During the process of use, it is further determined whether the pipe 20 is inserted into position by a gap between the anti-slide block 122 and the limit stop 121, to ensure the end face of the pipe 20 abuting both the limit stop 121 and the anti-slide block 122.

In the above solution, the limit stop 121 is limited at a side of the limit protrusion 1111 close to the abutting block 112 mainly by the limit protrusion 1111, so that the elastic clamping sleeve 12 can be sleeved on the core 111 of the pipe fitting joint 11. The limit protrusion 1111 may be located at an end of the core 111 close to the abutting block 112 or at an end of the core 111 away from the abutting block 112.

Further, in an embodiment, as shown in FIG. 1, the limit protrusion 1111 is located at an end of the core 111 away from the abutting block 112, and the core 111 is provided with a ring shape sealing tooth 1112 at the outer wall thereof. The sealing tooth 1112 is located between the limit protrusion 1111 and the abutting block 112. The maximum outer diameter of the sealing tooth 1112 is smaller than the inner wall diameter of the elastic clamping sleeve 12. In order to improve the reliability of the connection of pipes 20 during the use process of the connecting pipe fitting 10, the core 111 is further provided with the sealing tooth 1112 at the outer wall thereof, and the maximum outer diameter of the sealing tooth 1112 is arranged smaller than the inner wall diameter of the elastic clamping sleeve 12 and larger than the outer diameter of the limit protrusion 1111 to meet the installation requirements of the elastic clamping sleeve 12 on the core 111. Moreover, in order to facilitate the installation process of the elastic clamping sleeve 12 on the core 111, the limit protrusion 1111 is disposed at an end of the core 111 away from the abutting block 112, so that when the elastic clamping sleeve 12 is sleeved on the core 111, the limit stop 121 does not need to pass through the sealing tooth 1112 and then contacts the limit protrusion 1111, but is directly limited by the limit protrusion 1111 to a side close to the abutting block 112 to increases the installation efficiency of the elastic clamping sleeve 12 while reducing the constraints in the design of the limit stop 121. Moreover, the cross-sectional shape of the sealing tooth 1112 may be trapezoidal, rectangular, triangular or the like.

Further, in an embodiment, as shown in FIG. 6 and FIG. 7, the outer wall of the core 111 is further provided with two annular anti-off teeth 1113, and a maximum outer diameter of the anti-off tooth 1113 is smaller than the maximum outer diameter of the sealing tooth 1112. The two anti-off teeth 1113 are located on both sides of the sealing tooth 1112 respectively. By further providing the anti-off tooth 1113, the pipe 20 can be more reliably connected to the pipe fitting joint 11. Similar to the sealing teeth 1112, the shape of the anti-off tooth 1113 may be trapezoidal, rectangular, triangular or the like.

Further, in an embodiment, as shown in FIG. 6, the side wall of the sealing tooth 1112 and the side wall of the anti-off tooth 1113 are both tapered. An outer diameter of an end of the sealing tooth 1112 close to the abutting block 112 is larger, and an outer diameter of an end of anti-off tooth 1113 close to the abutting block 112 is larger. That enables a more reliable connection of pipes 20 installed on the pipe fitting joint 11.

Further, as shown in FIG. 7, a pipe assembly is provided in another embodiment, including a pipe 20, a pipe fitting joint 11 and an elastic clamping sleeve 12. An outer wall of a middle portion of the pipe fitting joint 11 is provided with an abutting block 112. An end of the pipe fitting joint 11 is a core 111, and an outer wall of the core 111 is provided with a limit protrusion 1111. An end face of the elastic clamping sleeve 12 is provided with a limit stop 121. An end of the limit stop 121 is connected to the elastic clamping sleeve 12, and another end of the limit stop 121 extends in a direction close to the central axis of the elastic clamping sleeve 12. A distance between the limit stop 121 and the central axis of the elastic clamping sleeve 12 is a first distance, and a distance between the limit protrusion 1111 and the central axis of the core 11 is a second distance. A difference between the second distance and the first distance is less than the deformable amount of the elastic clamping sleeve 12 in a radial direction, so that the pipe assembly has a first state and a second state;

The first state is a state where the elastic clamping sleeve 12 is sleeved on the core 1111, and the limit stop 121 is limited between the limit protrusion 1111 and the abutting block 112;

The second state is a state where the pipe 20 is inserted into the elastic clamping sleeve 12, an end face of the pipe 20 abuts against the limit stop 121, and the pipe 20 is sleeved on the core 111 after being reamed. The elastic clamping sleeve 12 shrinks to press the pipe 20 against the core 111.

When the elastic clamping sleeve 12 is sleeved on the pipe 20, the limit stop 121 abuts against the end face of the pipe 20. The core 111 can be inserted into the reamed pipe 20, and the elastic clamping sleeve 12 can shrink to press the tube 20 against the core 111. Through the above arrangement, the pipe fitting joint 11 can be effectively protected by the elastic clamping sleeve 12 during the process of transportation and storage, and the elastic clamping sleeve 12 can be easily and quickly removed from the core 111 during the process of installation and use, and then used for the connection between the pipe 20 and the core 111, which is possible to protect the pipe fitting joint 11 from damage and to quickly and easily apply to the connection of pipes 20. In the process of use, there is no need to additionally provide a fastening part to achieve the connection between the pipe 20 and the pipe fitting joint 11, thereby further reducing the cost of use.

Specifically, in the process of use, the elastic clamping sleeve 12 is first removed from the pipe fitting joint 11 by the foregoing method, and then, as shown in FIG.6, the pipe 20 to be connected is inserted into the elastic clamping sleeve 12 from the end of the elastic clamping sleeve 12 away from the limit stop 121, and the limit stop 121 abuts against the end face of the pipe 20. Then the pipe 20 is reamed by the reamer. Then, as shown in FIG. 7, the core 111 of the pipe fitting joint is inserted into the pipe 20, and the pipe 20 and the elastic clamping sleeve 12 are left to stand for a period of time to shrink. The pipe 20 is pressed by the elastic clamping sleeve 12 tightly on the core 111 to achieve the connection of pipes 20.

Moreover, in the process of reaming the pipe 20 by using a reamer, the pipe 20 may have a certain taper under the action of the reamer, and the elastic clamping sleeve 12 easily slides along the outer wall of the pipe 20 toward the middle of the pipe 20. In the present solution, based on the presence of the limit stop 121, when the reaming process is performed on the pipe 20 by the reamer, the limit stop 121 abuts the end of the pipe 20, thereby the occurrence of the sliding of the elastic clamping sleeve 12 into the pipe 20 is avoided, and the performance of the connecting pipe fitting 10 is further improved.

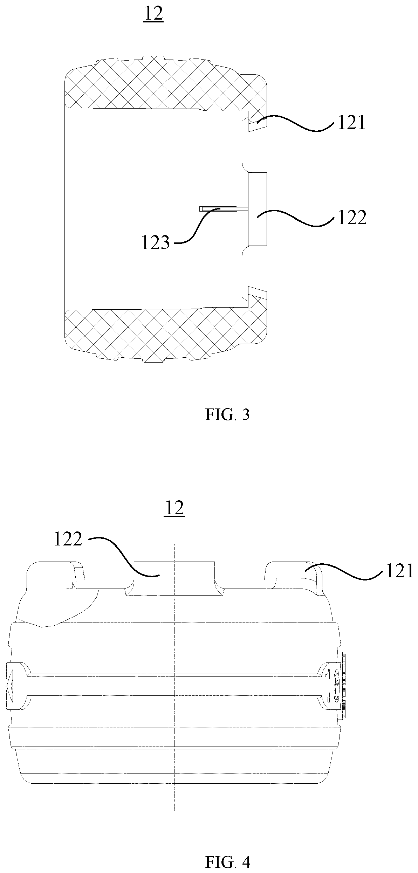

Further, as shown in FIG. 3 and FIG. 5, in an embodiment, an inner wall of the elastic clamping sleeve 12 is provided with a rib 123, and the rib 123 is arranged along an axial direction of the elastic clamping sleeve 12. The rib 123 can be in an interference fit with the pipe 20. By providing the rib 123 on the inner wall of the elastic clamping sleeve 12, the reliability of the tight fit between the elastic clamping sleeve 12 and the pipe 20 is further improved, and the elastic clamping sleeve 12 is prevented from being deformed due to environmental changes which will cause that the elastic clamping sleeve 12 and the pipe 20 fail to fit tightly. Moreover, there may be a plurality of ribs 123 that equidistantly distributed in the circumferential direction on the inner wall of the elastic clamping sleeve 12 to further improve the tightness of the cooperation between the elastic clamping sleeve 12 and the pipe 20.

In another embodiment, a connecting method for a pipe 20 is provided, using the connecting pipe fitting 10 described above, and including the following steps.

The elastic clamping sleeve is pressed along the radial direction of the elastic clamping sleeve to cause deformation of the elastic clamping sleeve so that the first distance is larger than the second distance. And then the elastic clamping sleeve is removed from the core.

The pipe to be connected is inserted into the elastic clamping sleeve until the end face of the pipe abuts against the limit stop.

The pipe sleeved with the elastic clamping sleeve is reamed by using a reamer.

The core is inserted into the reamed pipe, the elastic clamping sleeve shrinking after standing for a period of time such that the pipe is sleeved on the core tightly.

The connecting method for the pipe 20 provided by the above solution can effectively protect the pipe fitting joint 11 during the process of transportation by adopting the connecting pipe fitting 10 described in any of the above embodiments, and the elastic clamping sleeve 12 can be adopted during the process of installation and use conveniently and quickly to achieve the connection process of the pipes 20. Specifically, when the pipe 20 needs to be connected, the elastic clamping sleeve 12 sleeved on the core 111 is removed from the core 111, and then the pipe 20 to be connected is inserted into the elastic clamping sleeve 12. Then the pipe 20 is subjected to a reaming treatment by a reamer, and then the core 111 is inserted into the reamed pipe 20, which finally are left to stand for a period of time until the elastic clamping sleeve 12 shrinks to sleeve the pipe 20 on the core 111 tightly, thereby achieving the connection process of the pipes 20. In the case that the above solution protects the pipe fitting joint 11 from damage during the process of transportation, the connection process of the pipes 20 can be implemented conveniently and quickly, without any other component to achieve the connection of the pipes 20.

The technical features of the embodiments described above may be arbitrarily combined. For the sake of brevity of description, not all possible combinations of the technical features in the embodiments described above are described. However, as long as there is no contradiction between the combinations of these technical features, all should be considered as the scope of this specification.

The above embodiments only represent several examples of the present invention, and the description thereof is more specific and detailed, but it should not be construed as restricting the scope of the present invention. It should be noted that, for those skilled in the art, several variations and improvements may be made without departing from the concept of the present invention, and these are all within the protection scope of the present invention. Therefore, the protection scope of the present invention shall be defined by the appended claims.

## Claims

1. A connecting pipe fitting, **characterized by** comprising a pipe fitting joint and an elastic clamping sleeve, wherein: the pipe fitting joint comprises a core at an end thereof, an outer wall of a middle portion of the pipe fitting joint is provided with an abutting block, and the elastic clamping sleeve is sleeved on the core; an end face of the elastic clamping sleeve is provided with a limit stop, an end of the limit stop is connected to the elastic clamping sleeve, and another end of the limit stop extends in a direction close to a central axis of the elastic clamping sleeve; an outer wall of the core is provided with a limit protrusion, and the limit stop is limited between the abutting block and the limit protrusion; and a distance between the limit stop and the central axis of the elastic clamping sleeve is a first distance, a distance between the limit protrusion and the central axis of the core is a second distance, and a difference between the second distance and the first distance is less than a deformable amount of the elastic clamping sleeve in the radial direction.

2. The connecting pipe fitting according to claim 1, **characterized in that** the limit protrusion is an annular protrusion, there are two limit stops arranged to be opposite to each other, and the elastic clamping sleeve is able to be radially pressed and deformed, so that a distance between the two limit stops is larger than an outer diameter of the annular protrusion.

3. The connecting pipe fitting according to claim 2, **characterized in that**: a side wall of the annular protrusion is tapered such that an end of the annular protrusion close to the abutting block has a larger outer diameter; a side surface of the limit stop opposite to the core is an inclined surface; and an end of the limit stop close to the abutting block forms a tine engageable with a side of the annular protrusion close to the abutting block.

4. The connecting pipe fitting according to claim 2, **characterized in that**: the end face of the elastic clamping sleeve provided with the limit stop is further provided with two anti-slide blocks arranged to be opposite to each other; an end of each anti-slide block is connected to the elastic clamping sleeve, and another end of each anti-slide block extends in a direction close to the central axis of the elastic clamping sleeve; and a distance between the two anti-slide blocks is larger than an outer diameter of the annular protrusion.

5. The connecting pipe fitting according to claim 4, **characterized in that** the anti-slide blocks are located between the two limit stops, and the anti-slide blocks and the limit stops are equidistantly distributed in a circumferential direction of the end face of the elastic clamping sleeve.

6. The connecting pipe fitting according to any one of claims 1 to 5, **characterized in that** the limit protrusion is located at an end of the core away from the abutting block, an annular sealing tooth is disposed on an outer wall of the core, the sealing tooth is located between the limit protrusion and the abutting block, and a maximum outer diameter of the sealing tooth is smaller than a diameter of an inner wall of the elastic clamping sleeve.

7. The connecting pipe fitting according to claim 6, **characterized in that** the outer wall of the core is further provided with two annular anti-off teeth, a maximum outer diameter of each anti-off tooth is smaller than the maximum outer diameter of the sealing tooth, the two anti-off teeth are located on both sides of the sealing tooth respectively, and a side wall of the sealing tooth and a side wall of each anti-off tooth are both tapered such that an end of the sealing tooth close to the abutting block has a larger outer diameter and an end of the anti-off tooth close to the abutting block has a larger outer diameter.

8. A pipe assembly, **characterized by** comprising a pipe, a pipe fitting joint and an elastic clamping sleeve, wherein: an outer wall of a middle portion of the pipe fitting joint is provided with an abutting block, an end of the pipe fitting joint is a core, an outer wall of the core is provided with a limit protrusion, an end face of the elastic clamping sleeve is provided with a limit stop, an end of the limit stop is connected to the elastic clamping sleeve, and another end of the limit stop extends in an direction close to a central axis of the elastic clamping sleeve; a distance between the limit stop and the central axis of the elastic clamping sleeve is a first distance, a distance between the limit protrusion and the central axis of the core is a second distance, and a difference between the second distance and the first distance is less than a deformable amount of the elastic clamping sleeve in a radial direction, so that the pipe assembly has a first state and a second state;
the first state is a state where the elastic clamping sleeve is sleeved on the core, and the limit stop is limited between the limit protrusion and the abutting block; and
the second state is a state where the pipe is inserted into the elastic clamping sleeve, an end face of the pipe abuts against the limit stop, the pipe is sleeved on the core after being reamed, and the elastic clamping sleeve shrinks to press the pipe against the core.

9. The connecting pipe fitting according to claim 8, **characterized in that** an inner wall of the elastic clamping sleeve is provided with a rib arranged along a axial direction of the elastic clamping sleeve, and the rib is able to be in an interference fit with the pipe.

10. A pipe connecting method, **characterized by** adopting the connecting pipe fitting according to any one of claims 1 to 7, the method comprising:
pressing the elastic clamping sleeve along a radial direction of the elastic clamping sleeve to cause deformation of the elastic clamping sleeve so that the first distance is larger than the second distance, and removing the elastic clamping sleeve from the core;
inserting the pipe to be connected into the elastic clamping sleeve until the end face of the pipe abuts against the limit stop;
reaming the pipe sleeved with the elastic clamping sleeve by using a reamer; and
inserting the core into the reamed pipe, the elastic clamping sleeve shrinking after standing for a period of time such that the pipe is sleeved on the core tightly.
